# EUROPEAN PATENT SPECIFICATION

(11) **EP 0 319 483 B1**
(45) Date of publication and mention of the grant of the patent: **03.02.1993**
(21) Application number: 88830421.9
(22) Date of filing: 18.10.1988
(51) Int. Cl.: H02B 1/26

(54) **Modular low-voltage electrical panel for modular electrical apparatus**
Modulare elektrische Niederspannungsschalttafel für ein modulares elektrisches Gerät
Panneau électrique modulaire à basse tension pour appareil électrique modulaire

(30) Priority: 03.12.1987 IT 2287187
(43) Date of publication of application: 07.06.1989
(73) Proprietor: Apostolo, Carlo, I-22055 Merate (Como) (IT)
(72) Inventor: Apostolo, Carlo, I-22055 Merate (Como) (IT)
(74) Representative: Cicogna, Franco

(56) References cited:
- EP-A- 0 129 695
- EP-A- 0 143 718
- DE-A- 1 490 441
- GB-A- 1 228 231
- US-A- 3 725 746

## Description

### BACKGROUND OF THE INVENTION

The present invention relates to a modular low-voltage electrical panel for modular electrical apparatus.

As is known, very felt is presently the need of making, in a quick and functional way, low-voltage electrical panels, in particular low-voltage electrical panels for driving and protecting several types of electrical apparatus, of comparatively low power and, in particular, for protecting illumination and power circuits, in civil buildings and small scale industries.

Known electrical panels for the indicated applications are presently made by using scarcely flexible base component elements, that is component elements which are not suitable for a broad range of applications and which, for installation, frequently require skilled labour and comparatively long assembling times which negatively affect the cost of the finished panel.

Moreover, another problem of known electrical panels for the mentioned applications is that they do not afford the possibility of standardizing all of the used elements, included the conductor elements.

The document DE-A-1 490 441 discloses an electrical panel having substantially the features of the pre-characterizing portion of claim 1.

### SUMMARY OF THE INVENTION

Accordingly, the task of the present invention is to overcome the above mentioned drawbacks, by providing such an electrical panel which can be made starting from metal sheet elements and insulating and copper materials, and which can be quickly and easily installed, while being effective to be used in a lot of applications.

Within the scope of the above task, a main object of the present invention is to provide such an electrical panel which can be easily made according to several embodiments, adapted to meet the required protection standards, and, more specifically, from a normal standard to a tight standard.

Another object of the present invention is to provide such an electrical panel which can be easily and quickly assembled and has standardized size, so as to provide the possibility of making several different types of drawers and columns or uprights, as well as preassembling modular breakers, and this by using standardized length conductor wires, with the possibility of using conductor wires having lengths within a very broad range.

Yet another object of the present invention is to provide such an electrical panel which affords the possibility of using standardized branching busbars, related to the specific type of breaker being applied and which panel, moreover, can be made starting from a reduced number of standardized elements adapted to be asily and quickly coupled to one another.

According to one aspect of the present invention, the above mentioned task and objects, as well as yet other objects, which will become more apparent hereinafter, are achieved by a modular low-voltage electrical panel, for modular electrical apparatus having the features of the characterizing portion of claim 1.

### BRIEF DESCRIPTION OF THE DRAWINGS

Further characteristics and advantages of the present invention will become more apparent hereinafter from the following detailed description of a preferred, though not exclusive, embodiment of a modular electrical panel, which is illustrated, by way of an indicative but not limitative example, in the accompanying drawings, where:
Fig. 1 is a perspective schematic view illustrating the modular body of the electrical panel according to the invention, and illustrating in a detailed way the supporting legs;
Fig. 2 shows the modular body including standardized supporting members for modular electrical apparatus and for the lower coupling terminal block, with the related wiring conductors;
Fig. 3 shows the modular body thereto there has been applied the wire covering plates;
Fig. 4 is a perspective view illustrating the modular electrical apparatus supporting members and the wire covering plate;
Fig. 5 is another perspective view, partially broken away, illustrating a further modular body including a box-like supporting member for a main breaker;
Fig. 6 is a schematic cross-sectional view illustrating a column or upright made by using the electrical panel according to the invention, and illustrates in a detailed way the wiring conductors coupling the electrical apparatus;
   and
Figs. 7 to 10 show possible embodiments of electrical panels which can be made by using the modular body according to the invention.

### DESCRIPTION OF THE PREFERRED EMBODIMENTS

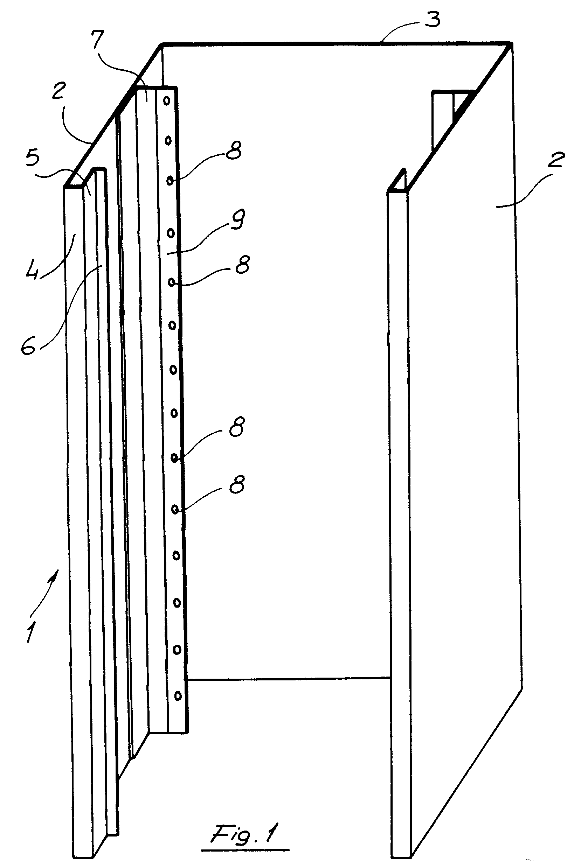

With reference to the Figures of the accompanying drawings and, more specifically, to Figure 1, a modular body is herein illustrated, indicated at the reference number 1, which is made starting from a suitable metal sheet material, which is bent in such a way as to define a pair of opposite side-walls 2, which are mutually coupled by a bottom member 3.

At their free edges, the side walls 2, which have a given standardized length size, define an upturned body 4, with the inner leg 5, parallel to the side walls, ending at a free edge 6 which is perpendicular to said side walls.

Each modular body, at a middle portion of the inner face of said side walls, defines a supporting leg, indicated at 7 and which extends for the overall length of the modular body and is spaced from the bottom member 3.

In this connection, it should be pointed out that the modular body 1 is made of a painted sheet metal, whilst the legs 7 are made of a not painted sheet metal.

Moreover, each supporting leg is provided with a plurality of throughgoing holes 8, formed at a region 9 which, during the painting step, is so protected as to assure the continuity of the ground coupling and the same potential for the overall apparatus supporting system.

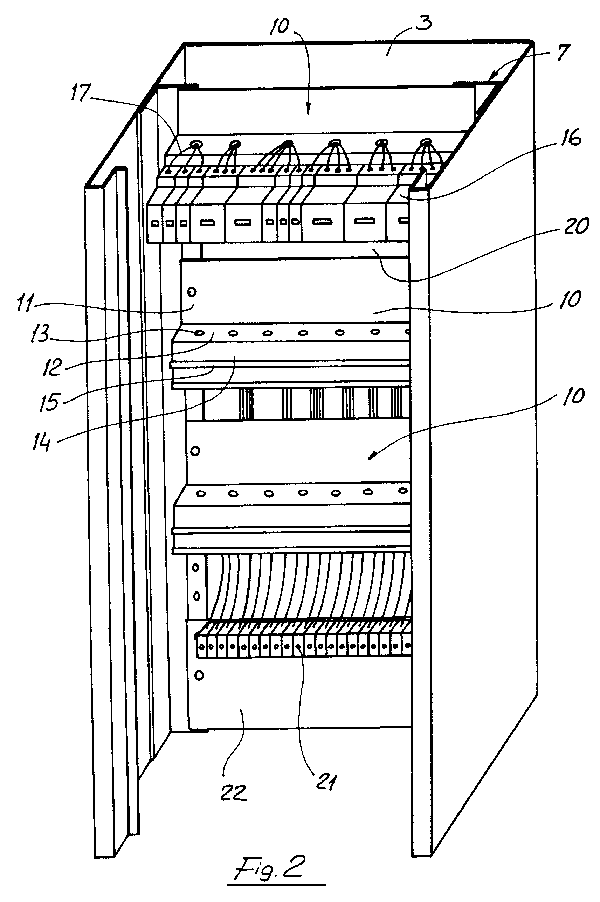

On the supporting leg 2, as shown in a more detailed way in Figure 2, there are applied L-shaped supporting members 10, which define a flat portion 11, attached to the legs 7, therefrom perpendicularly extends a leg 12 having holes 13, and thereto an outer leg 14 supporting a standardized rail 15 is coupled.

The electrical breakers and/or apparatus 16 may be prewired by using standardized length wires 17, which are preliminarly precut and electrically terminated by using automatic machines.

The system further provides space for greater lengths and allows for the possibility of automatizating the electrical wiring and assembling of the electrical apparatus to the modular body 1.

As specifically shown in Figure 2, each supporting member 10 comprises a standardized rail 15 and includes holes 13 thereinto there are introduced annular members, for example made of a good strength material, such as rubber or the like, in order to prevent the supply wires 17 from being damaged.

According to one aspect of the invention, the electrical apparatuses 16 are supported on said supporting members 10 through standardized rails 15 which are removably affixed to the supporting legs 7, in turn electrically welded to the modular body 1.

According to another aspect of the invention, the conductor wires 17, coming from said electrical apparatus 16, are protected by the box-like bodies of the supporting members 10, as well as by covering plates 20.

As shown, said wires arrive at the bottom terminal blocks 21, which are supported by a base metal plate 22 also removably affixed to the supporting legs 7.

In Figure 2, the modular body is shown as provided with a bottom terminal block.

In this connection it should be apparent that, if required, this terminal block can be arranged at the top or, if desired, it will be possible to use a bottom terminal block and a top terminal block.

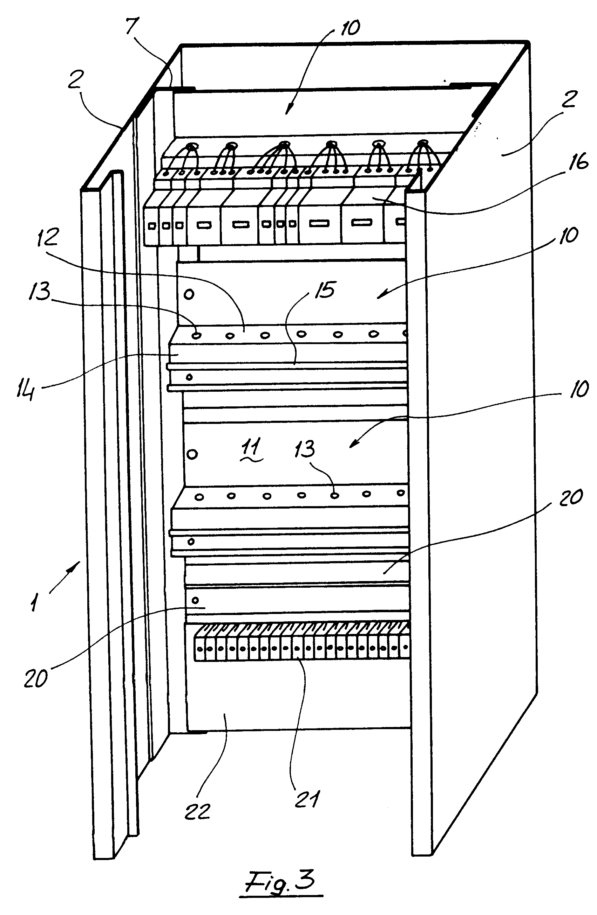

As specifically shown in Figure 3, the upright or column modular body further comprises wire covering plates 20, which are removably affixed to the supporting legs 2.

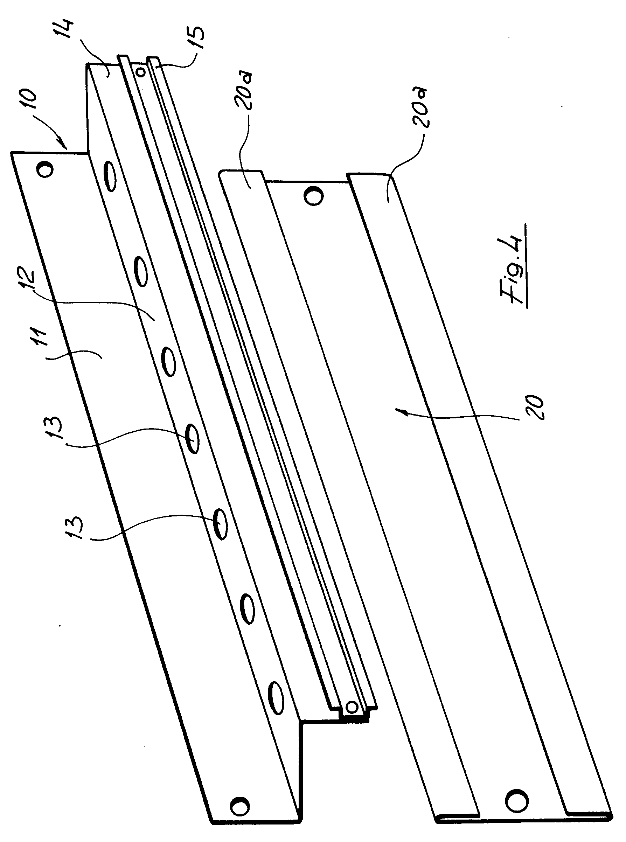

Figure 4 shows in a detailed way the supporting members 10 and covering plates 20 which are longitudinally provided with upturned edges 20a in order to prevent the condutor wires from being cut damaged.

Figures 5 illustrates, by a perspective view, a modular body with a box-shape element 30 for a main breaker provided with an insulating casing and output bus-bars 31, arranged for the coupling of the supply wires of the branch breakers which are supported by insulator members 32 which, in turn, are anchored to said support member and comprise a box-like body 33 snap coupled so as to provide a minimum protection degree corresponding to IP 20.

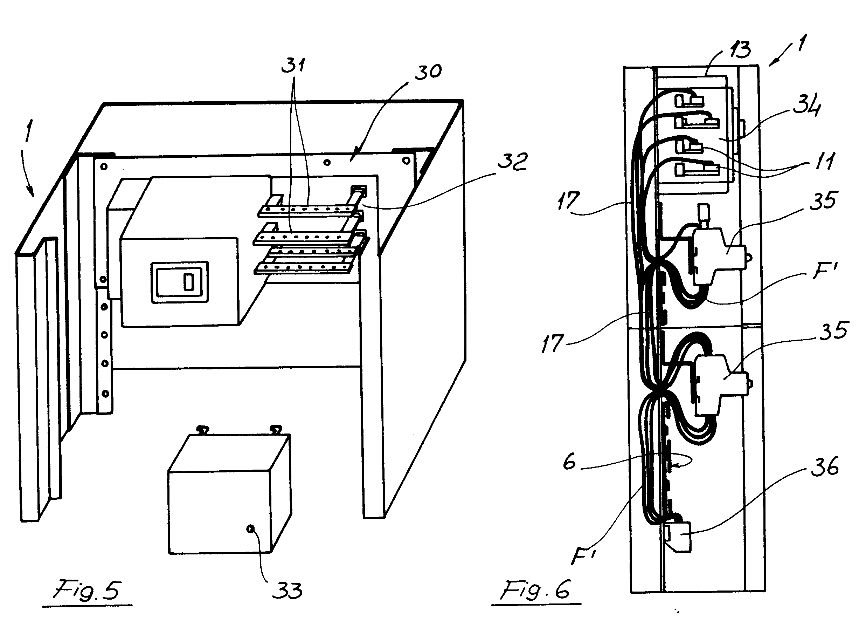

Figure 6 schematically illustrates a cross-section view, therein there is clearly shown the path of the conductor wires 17 branched from the main breaker 34, including the bus-bar system 31 for supplying the distribution breaker 35, and is further shown the path of the electrical wires from the distribution breakers up to the bottom terminal block 36.

This view further clearly shows the conductor wire segregation system, which is made with a supporting member for the main breaker 30 and related cover 33, and with the supporting members 7 for supporting the modular apparatus and terminal blocks with the related wire covering plates 20.

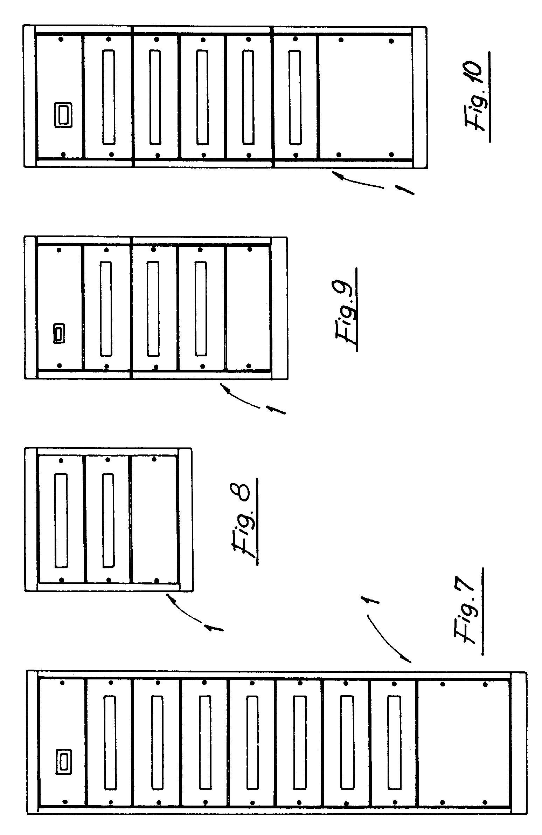

Figures 7 to 10 show possible embodiments of electrical panels which can be easily and quickly made starting from the elements of the modular system according to the invention,

These electrical panels have been shown closed by related doors, but without the outer doors.

The invention, as it should be apparent from the preceding disclosures, affords the possibility of automatizing and rationalizing the contruction of several types of electrical panels.

From the above disclosures it should be apparent that the invention fully achieves the intended task and objects.

In particular, the invention affords the possibility of quickly and easily making electrical panels having the following features:
a) An outer protection degree of three types, starting from normal electrical panels having a protection degree corresponding to IP 30, up to tight electrical panels having a protection degree of IP 41 to a protection degree of IP 54.
b) Size standardization which affords the possibility of making modular uprights and/or drawers, having a height which can be varied in a modular way.
c) A minimum inner protection degree corresponding to IP 20 with respect to the under-voltage parts, with the doors in an open condition and with the apparatus covering panels removed.
d) a metallically segretated branching bus-bar systems, with a removable inspection cover.
e) The possibility of completing the wiring by using support members for prewired modular apparatus; in particular, after having completed the supporting member, uprights or drawers are applied, in turn preassembled with base and electrical terminations,
f) Preassembling of the support members with modular breakers, by using standardized length wires, which are preliminarly precut and electrically terminated by using automatic machines, the system providing space for greater lengths.
g) Elimination of the presently used PVC-cover channels for holding the electrical wires, which channels are very expensive and, moreover, are to be cut to the desired size.
h) For the application of the electrical modular apparatus there is provided exclusively a type of code, which comprises a supporting member with a DIN guiding rail and wire covering plate.
i) For the application of boxed-in mains breaker, there is provided, for each type of breaker, a single code, which comprises a supporting member, pre-perforated branching bars and related insulator members and inspection cover.
l) The coupling bus-bars and branching bus-bars, of the several types and ratings for box-in breakers, are standardized and form a part of the product code, related to the type of breaker, jointly with the related supporting insulator members.
m) All of the system is designed so that the assembling of the several elements can be performed by using fixed abutments, that is without any adjustment members, which require long assembling times.

## Claims

1. A modular low-voltage electrical panel, for modular electrical apparatus, comprising at least a modular body (1), having a given length, and provided with a pair of opposite side walls (2), coupled by a bottom member (3) and including, on their inner faces, supporting legs (7) extending for the overall length of said modular body (1) and spaced from said bottom member (3), said sidewalls (2), at the free edges thereof, being provided with a bent portion (4) comprising a portion turned parallel to the respective side wall (2), and extended by an inner portion ending at a free edge perpendicular to said side wall (2), each supporting leg (7) comprising a plurality of throughgoing holes (8), characterized in that said panel further comprises at least a supporting member (10) adapted to be removably coupled to said supporting legs (7) and including a standardized rail member (15) for coupling said electrical apparatus (15), and in that said supporting member (10) is provided with a flat portion (11), for coupling to said supporting legs (7), therefrom a perforated leg (12) extends, adapted to allow for supply wires (17) to pass therethrough.

2. An electrical panel according to Claim 1, characterized in that into said holes (13) of said perforated leg (13) there are introduced annular members having a high strength, made of rubber or the like, adapted to protect the conductor wires (17) from possible damages.

3. An electrical panel according to Claims 1 and 2, wherein said panel further comprises conductor wire (17) covering plates (20), characterized in that the longitudinal edges (20a) of said covering plates are upturned.

## Patentansprüche

1. Modulare elektrische Niederspannungsschalttafel für ein modulares elektrisches Gerät, mit wenigstens einem modularischen Körper (1) bestimmter Länge, und mit einem Paar gegeneinanderstehenden Wänden (2) vorgesehen, die mittels eines Bodenelementes (3) gekoppelt und, auf ihren inneren Flächen, mit auf die ganze Länge des obangenannten modularischen Körpers (1) sich erstreckenden und von dem obengenannten Bodenelement (3) entfernten Stützarme (7) vorgesehen sind, wobei diese Seitenwände (2), auf ihren freien Kanten, mit einer gekrümmten Portion (4), die eine gekrümmte Portion parallel der entsprechenden Seitenwand (2) einschliesst, vorgesehen und durch eine an eine freie Kante senkrecht der obengenannten Seitenwand (2) endende innere Portion erstreckt wird, wobei jeder Stützarm (7) mit mehreren Durchgangslöcher (8) vorgesehen ist,
dadurch gekennzeichnet, dass die obengenannte Tafel ferner mit wenigstens einem Stützelement (10), das zur lösbaren Kupplung mit den obengenannten Stützarmen (7) geeignet ist, vorgesehen ist und ein standardisierte Schieneelement einschliesst, zur Kupplung des obengenannten elektrischen Gerätes (15), und dass das obengenannte Stützelement (10) mit einer Flachportion (11) vorgesehen ist, aus der einen gelochte Arm (12) erstreckt sich, der zum Ermöglichen des Durchganges für Speisekabeln geeignet ist.

2. Elektrische Tafel nach Anspruch 1, dadurch gekennzeichnet, dass innerhalb den obengenannten Löchern (13) des obengenannten gelochten Armes (13) ringförmigen mit hoher Festigkeit vorgesehenen Elemente eingefügt werden, die aus Gummi oder dergleichen bestehen, und zum Schützen des Leitungskabels (17) gegen eventuellen Beschädigungen geeignet ist.

3. Elektrische Tafel nach Anspruch 1 oder 2, wo diese Tafel ferner mit Deckungsplatten (20) für den Leitungskabeln (17) vorgesehen ist, dadurch gekennzeichnet, dass die Längskanten (20a) der obengenannten Deckungsplatten aufgedreht sind.

## Revendications

1. Panneau électrique modulaire à basse tension, pour appareil électrique modulaire, comprenant au moins un corps modulaire (1), ayant une longueur donnée, et muni d'un pair de parois latérales opposées (2), accouplées par un élément de fond (3) et comprenant, sur leur faces intérieures, des bras de support (7) s'étendant pour la longueur entière dudit corps modulaire (1) et ecartés dudit élément de fond (3), lesdites parois latérales (2), sur leur bord libre, étant munies d'une portion courbée (4) comprenant une portion tournée parallèlement à la paroi latérale (2) respective, et étendue par une portion intérieure terminant aur un bord libre perpendiculaire à ladite paroi latérale (2), chaque bras de support (7) comprenant une pluralité de trous passants (8),
caractérisé en ce que ledit panneau comprend en outre au moins un élément de support (10) apte à être accouplé d'une manière amovible auxdits bras de support (7) et comprenant un élément (15) en forme de rail étalonné pour accoupler ledit appareil électrique (15), et en ce que ledit élément de support (10) est muni d'une portion plate (11) pour accoupler avec lesdits bras (7) de support desquels un bras perforé (12) s'étend, apte à permettre que les câbles d'alimentation (17) y passent à travers.

2. Panneau électrique selon la revendication 1, caractérisé en ce que dans lesditstrous (13) dudit bras perforé (13) il y a introduit des éléments annulaires ayant une résistance élevée, faits en caoutchouc ou similaire, aptes à protéger les câbles conducteurs (17) des endommagements éventuels.

3. Panneau électrique selon la revendication 1 et 2, où ledit panneau comprend en outre des plaques (20) de couverture du câble conducteur (17), caractérisé en ce que les bords longitudinals (20a) desdites plaques de couverture sont tournés en haut.
